Europäisches Patentamt

European Patent Office

Office européen des brevets

(11) Veröffentlichungsnummer: **0 270 849 B1**

(19)

(12) **EUROPÄISCHE PATENTSCHRIFT**

(45) Veröffentlichungstag der Patentschrift: **15.04.92**

(51) Int. Cl.5: **G09F  17/00**, G08B 5/00

(21) Anmeldenummer: **87116461.2**

(22) Anmeldetag: **07.11.87**

(54) **Signalflagge.**

(30) Priorität: **13.11.86 DE 3638697**

(43) Veröffentlichungstag der Anmeldung:
**15.06.88 Patentblatt  88/24**

(45) Bekanntmachung des Hinweises auf die
Patenterteilung:
**15.04.92 Patentblatt  92/16**

(84) Benannte Vertragsstaaten:
**AT BE CH ES FR GB GR IT LI LU NL SE**

(56) Entgegenhaltungen:
DE-U- 8 529 692          DE-U- 8 616 333
DE-U- 8 627 642          US-A- 4 002 138
US-A- 4 332 210          US-A- 4 574 726
US-A- 4 590 883

(73) Patentinhaber: **Alboran Warenvertriebsgesellschaft mbH
Ifflandstrasse 35
W-2000 Hamburg 76(DE)**

(72) Erfinder: **Seibert, Peter
Ifflandstrasse 35
W-2000 Hamburg 76(DE)**
Erfinder: **Schulzke, Kurt
Ifflandstrasse 35
W-2000 Hamburg 76(DE)**

(74) Vertreter: **Siewers, Gescha, Dr.
Rechtsanwälte Dr. Harmsen, Dr. Utescher
Dipl.-Chem. Harmsen, Bartholatus Dr. Schaeffer, Dr. Fricke, Wolter Patentanwalt Dr. Siewers Adenauerallee 28
W-2000 Hamburg 1(DE)**

Rank Xerox (UK) Business Services

## Beschreibung

Die Erfindung betrifft eine neuartige Signalflagge für Notfälle.

Es gibt bereits eine ganze Anzahl von Signalvorrichtungen zur Erregung von Aufmerksamkeit bei Not- oder Unfällen sowohl im Straßenverkehr als auch auf See wie beispielsweise festinstallierte oder transportable Warnblickleuchten, Warndreiekke, Leuchtpatronen oder -raketen usw. Ein großer Nachteil der meisten bekannten Vorrichtungen besteht jedoch darin, daß sie relativ groß und gegebenenfalls sogar sperrig sind und daß sie häufig von einer äußeren Energiequelle wie beispielsweise elektrischen Batterien oder der Autoelektrik abhängen. Erfahrungsgemäß muß aber gerade bei Unfällen mit einem Ausfall äußerer Energiequellen gerechnet werden. Außerdem hat sich immer wieder gezeigt, daß bei Unfällen auf See mit kleineren Booten oder bei Surfern sogar etwa vorhandene Notfallsignalvorrichtungen deswegen nicht in Betrieb gesetzt werden können, weil sie von dem verunglückten aufgrund ihrer Größe und ihres Gewichtes nicht am Körper getragen werden und daher im Augenblick des Unfalls nicht oder nicht mehr greifbar sind. Es hat daher auch nicht an Versuchen gefehlt, Signalvorrichtungen zu entwikkeln, die relativ klein und leicht handhabbar sind und ohne weiteres bei Verrichtung der verschiedensten Tätigkeiten mitgeführt werden können. So ist beispielsweise aus dem deutschen Gebrauchsmuster 85 29 692 eine Signalflagge für Seenotfälle bekannt, die dadurch gekennzeichnet ist, daß die Fahnenstange aus ineinandergekoppelten Teilen besteht, die im Bereich des Griffteils hinein zusammenlegbar sind und wobei der Griffteil ein Gehäuse für die Aufnahme der zusammengelegten Fahnenstange und des daran befestigten Fahnentuches bildet. Das in diesem Gebrauchsmuster beschriebene Gerät weist allerdings den Nachteil auf, daß die Signalflagge trotz auffälliger Färbung des Fahnentuches bei Seenotfällen häufig nur schwer erkennbar ist, beispielsweise wenn sich die Unfälle im Nebel oder während Regenboen ereignen. Außerdem ist das Gerät noch relativ großvolumig, so daß es beispielsweise von Surfern nicht mitgeführt wird, weil diese sich durch die Größe und des Gewichtes des Gerätes beim Sport beeinträchtigt fühlen. Außerdem hat sich herausgestellt, daß derartige Geräte in Notsituationen an Land und hier insbesondere im Straßenverkehr , da sie von einer Person gehalten werden müssen, wenig hilfreich sind, da der Helfer in der Regel in Notsituationen seine Hände frei haben muß und nicht durch eine Signalflagge beinträchtigt werden kann.

Der Erfindung liegt daher die Aufgabe zugrunde, eine Signalflagge der Eingangs beschriebenen Art so zu verändern, daß die geschilderten Nachteile vermieden werden.

Zur Lösung der Aufgabe wird eine Signalflagge mit Fahnenstange und an dieser anschließendem Griffteil gemäß Patentanspruch 1 vorgeschlagen.

Die erfindungsgemäße Signalflagge besteht aus einer zusammenlegbaren und zwar insbesondere teleskopartig ausgebildeten Fahnenstange mit einem daran anschließenden Griffteil, wobei die Fahnenstange in den Griffteil zusammenlegbar oder teleskopierbar ist und der Griffteil damit als Gehäuse zur Aufnahme der Fahnenstange mit dem daran befestigten Fahnentuch dient. Das Fahnentuch besteht aus einem leichten, widerstandsfähigen und seewasserfesten Material mit hoher Reflektionsfähigkeit; vorzugsweise wird ein textiles Material wie beispielsweise ein Polyamidgewebe eingesetzt, das mit stark reflektierenden Farben wie beispielsweise sogenannten Neonfarben imprägniert ist. Als Warn- und Schockfarben werden vorzugsweise die Farben Orange, Rot oder Rosa verwendet, außerdem kann das Fahnentuch mit einem gut erkennbaren Hinweis auf den Notfall, beispielsweise mit den Buchstaben SOS gekennzeichnet sein. Der Fuß des Griffteiles der Signalflagge weist Vorrichtungen zur Befestigung der Signalflagge und/oder zur Aufnahme weiterer Hinweismittel für Notfälle auf. Gerade im Straßenverkehr hat es sich als wichtig erwiesen, daß es möglich ist, die Signalflagge beispielsweise an verunfallten Fahrzeugen deutlich sichtbar anzubringen; dies gelingt dadurch, daß der Fuß des Griffteiles mit einem Schlitz versehen ist, dessen lichte Weite der Stärke üblichen Kraftfahrzeugfensterglases entspricht, so daß der Fuß beispielsweise auf ein teilweise heruntergedrehtes Fenster des Kraftfahrzeuges aufgesteckt werden kann. Auf diese Weise kann die Signalflagge nicht nur beim Halten, sondern auch bei langsamer Fahrt aufgestellt werden, um nachfolgende oder entgegenkommende Fahrzeuge auf eine ungewöhnliche Situation rechtzeitig hinzuweisen. Der Fuß des Griffteiles kann vorzugsweise bei Verwendung bei Seenotfällen, wie sie beispielsweise zunehmend beim Surfen beobachtet werden, auch mit einem Adapter für beispielsweise Abschußvorrichtungen für Leuchtpatronen versehen werden.

Das im zusammengelegten Zustand als Gehäuse dienende Griffteil wird mit einer Kappe verschlossen, an die das Fahnentuch und das obere Ende der Fahnenstange befestigt sind. Der Verschluß zwischen Kappe und Griffteil ist als Bajonettverschluß ausgebildet, da sich herausgestellt hat, daß es auch möglich sein muß, beispielsweise bei Seenotfällen die Signalflagge ohne Gebrauch der Hände, also beispielsweise nur durch Drehen der Kappe mit den Zähnen zu entfalten. Vorzugsweise besteht auch die Kappe selbst aus stark reflektierendem Material oder ist auf der Innen- oder Außenseite mit einem solchen Material versehen, da dies eine zusätzliche Möglichkeit bietet, die Aufmerksamkeit der Helfer auf sich zu lenken.

Auch das Fahnentuch kann zusätzlich mit Streifen aus solchem reflektierendem Material versehen werden, um die Erkennbarkeit unter verschiedenen Lichteinfallswinkeln zu erhöhen.

Der Griffteil der erfindungsgemäßen Signalflagge ist nach unten konisch verjüngt ausgebildet und die teleskopartig zusammenlegbare Fahnenstange ist exzentrisch vom Mittelpunkt des Fußes des Griffteiles befestigt, da sich herausgestellt hat, daß das Verstauen der Fahnenstange und des Fahnentuches in einem Ringraum zwischen Fahnenstange und Innenwand des Griffteiles entsprechend den vorbeschriebenen Geräten technisch schwierig und aufwendig ist. Es ist daher sehr viel einfacher, wenn die Teleskopfahnenstange exzentrisch vom Mittelpunkt im Fußteil befestigt ist, da dann mehr Platz für das Verstauen des Fahnentuches bleibt. Auch eine konische Verjüngung zum Fußende hin hat sich als nützlich erwiesen, da auf diese Weise weiterer Raum für die Aufbewahrung des Fahnentuches gewonnen werden kann. Um zu verhindern, daß beim Atnehmen der Kappe vom Griffteil die exzentrisch befestigte Fahnenstange der Drehbewegung der Kappe folgen muß, ist die Befestigung der Fahnenstange an der Kappe über ein drehbares Zwischenteil durchgeführt.

Die erfindungsgemäße Signalflagge wird vorzugsweise überwiegend aus Kunststoff gefertigt, da sich hierdurch eine beträchlicht Gewichtsersparnis erzielen läßt. Das Gerät kann so dimensioniert werden, daß sich in einem etwa 20 cm langen Gehäuse mit einem Durchmesser von etwa 4 - 5 cm ein Fahnentuch mit den Maßen von etwa 70 - 80 × 50 - 60 cm unterbringen läßt. Es ist daher besonders geeignet, als persönliches Signal- und Rettungsmittel sowohl im Straßenverkehr als auch auf See mitgeführt zu werden.

Im folgenden wird die Erfindung anhand der Zeichnung näher erläutert:

Figur 1 ist eine schematische Teilansicht der erfindungsgemäßen Signalflagge.

Figur 2 und Figur 3 zeigen schematische Querschnitte des Fußteiles des Griffteiles.

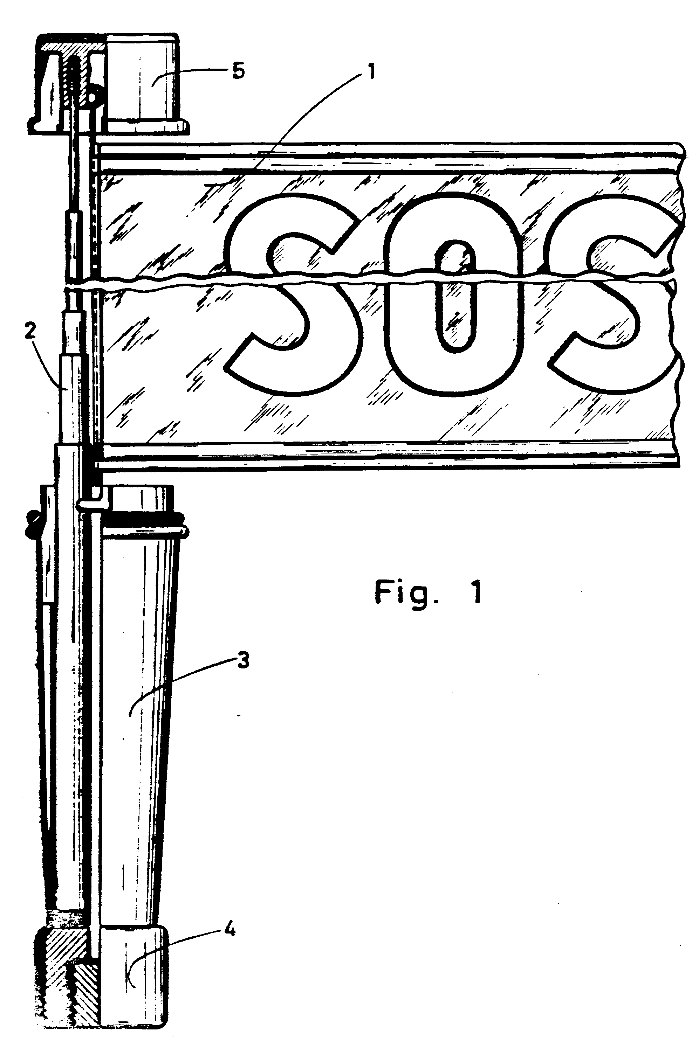

Wie aus Figur 1 zu entnehmen ist, besteht die erfindungsgemäße Signalflagge aus dem Fahnentuch 1, das an der teleskopartig gestalteten Fahnenstange 2 befestigt ist, wobei letztere wiederum ihre Befestigung im Fuß 4 des Griffteiles 3 findet. Die Fahnenstange 2 ist im Fuß 4 des Griffteiles 3 exzentrisch vom Mittelpunkt befestigt, um eine größere Staumöglichkeit für das Fahnentuch im zusammengeschobenen Zustand zu ergeben. Das Fahnentuch 1 ist sowohl im zusammengeschobenen als auch im entfalteten Zustand am oberen Ende an der Kappe 5 befestigt, die ebenfalls die Befestigung (nicht sichtbar) der Teleskopstange mittels eines drehbaren Zwischenteiles im Oberteil der Kappe übernimmt.

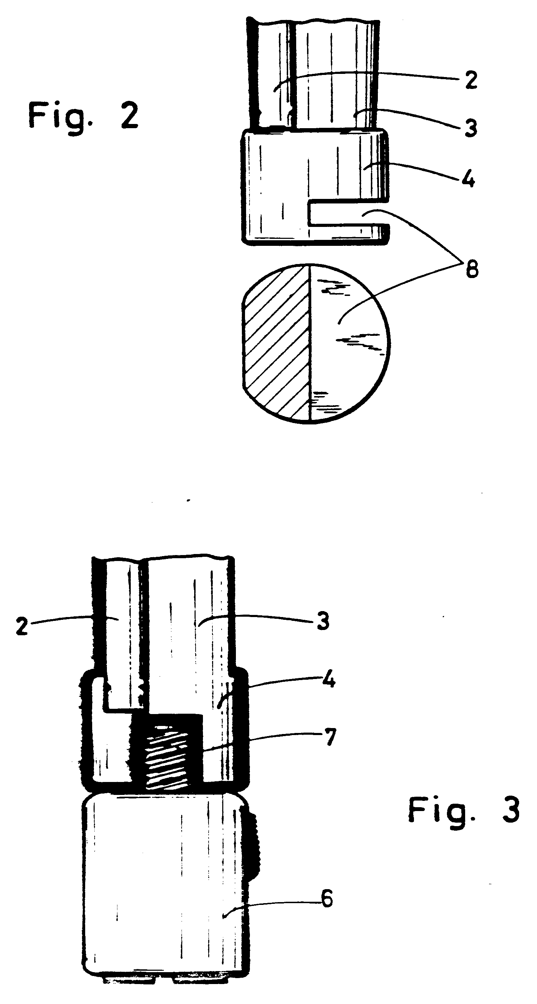

Wie sich aus Figur 2 und Figur 3 ergibt, ist der konisch nach unten verjüngte Griffteil mit einem Fuß versehen, der je nach Verwendungszweck verschieden ausgestaltet sein kann. Die Fahnenstange 2 ist im Griffteil 3 an die Fußplatte 4 befestigt, die gegebenenfalls mit einem Adapter 7 zum Aufsetzen einer weiteren Signalvorrichtung 6 ausgerüstet sein kann. Die weitere Signalvorrichtung 6 kann beispielsweise eine Abschußvorrichtung für Leuchtpatronen sein.

Vorzugsweise bei Verwendung der erfindungsgemäßen Signalflagge auf der Straße eignet sich die Ausführungsform nach Figur 3, bei der die Fahnenstange 2 im Griffteil 3 ebenfalls an der Fußplatte 4 befestigt ist. Diese Fußplatte 4 weist aber einen Schlitz 8 auf, dessen lichte Weite der Stärke des üblichen Fensterglases für Kraftfahrzeuge entspricht. Mit Hilfe dieses Schlitzes kann daher die Signalflagge in einem Fenster eines Fahrzeuges befestigt werden.

**Patentansprüche**

1. Signalflagge mit Fahnenstange (2) und an dieser anschließendem Griffteil (3), wobei die Fahnenstange in dem Griffteil zusammenlegbar ist, der Griffteil ein Gehäuse zur Aufnahme von zusammengelegter Fahnenstange mit daran befestigtem Fahnentuch (1) bildet, der Fuß des Griffteiles Vorrichtungen (6,8) zur Befestigung der Signalflagge aufweist und das Fahnentuch aus auffällig gefärbten Material besteht, dadurch gekennzeichnet, daß die Fahnenstange (2) teleskopartig zusammenlegbar und exzentrisch vom Mittelpunkt des Fusses (4) des Griffteiles (3) befestigt, und der Griffteil (3) nach unten konisch verjüngt ausgebildet ist.

2. Signalflagge nach Anspruch 1, dadurch gekennzeichnet, daß der Fuß (4) des Griffteiles (3) Adaptervorrichtungen (7) für eine Abschußvorrichtung für Leuchtpatronen enthält.

3. Signalflagge nach Anspruch 1, dadurch gekennzeichnet, daß der Fuß (4) des Griffteiles (3) mit einem Schlitz (8) mit der lichten Weite der Stärke üblichen Kraftfahrzeugfensterglases versehen ist.

4. Signalflagge nach Anspruch 1 - 3, dadurch gekennzeichnet, daß das obere Ende der Fahnenstange (2) mit einer mit dem Griffteil (3) über ein Bajonettverschluß verbundenen Kappe (5) befestigt ist.

5. Signalflagge nach Anspruch 1 - 4, dadurch gekennzeichnet, daß die Fahnenstange (2) an der Kappe (5) über ein drehbares Zwischenteil befestigt ist.

6. Signalflagge nach Anspruch 1 - 5, dadurch gekennzeichnet, daß die Kappe (5) aus stark reflektierendem Material besteht oder mit solchem versehen ist.

7. Signalflagge nach Anspruch 1 - 6, dadurch gekennzeichnet, daß das Fahnentuch (1) aus stark reflektierendem Material besteht.

## Claims

1. A signal flag comprising a flagstaff and an adjoining grip element, the flagstaff being foldable into the grip element and the grip element forming a housing for receiving the folded flagstaff with the flag fastened thereon, the foot of the grip element having fastening means for affixing the signal flag and the flag being made of a shocking coloured material, characterized in that the flagstaff (2) can be telescoped and is fastened offset from the center of the foot (4) of the grip element (3) and the grip element (3) is conically tapered downwardly.

2. A signal flag according to claim 1, characterized in that the foot (4) of the grip element (3) is provided with an adapter device (7) for launchers for signal cartridges.

3. A signal flag according to claim 1, characterized in that the foot (4) of the grip element (3) is provided with a slit (8) having an inside width corresponding to the size of the usual automotive window glass.

4. A signal flag according to claims 1 - 3, characterized in that the upper end of the flagstaff (2) is provided with a cap (5) being attached to the grip element (3) through a bayonet catch.

5. A signal flag according to claims 1 - 4, characterized in that the flagstaff (2) is attached to the cap (5) through a pivotable element.

6. A signal flag according to claims 1 - 5, characterized in that the cap (5) is made of or is provided with a highly reflective material.

7. A signal flag according to claims 1 - 6, characterized in that the bunting of the flag (1) is made of a highly reflective material.

## Revendications

1. Drapeau de signalisation comprenant une hampe et une manche se rattachant à la hampe, la hampe étant pliable dans la manche, la manche formant un boîtier pour recevoir la hampe pliée avec l'étoffe y attachée, le pied de la manche ayant des dispositifs pour fixer le drapeau de signalisation et l'étoffe consistant en une matière teinte en couleurs voyantes, caractérisé par le fait que la hampe (2) est pliable de facon télescopique et est fixée excentriquement par rapport au centre du pied (4) de la manche (3) et par le fait que la manche (3) s'effile coniquement vers le bas.

2. Drapeau de signalisation selon la revendication 1, caractérisé par le fait que le pied (4) de la manche (3) contient des adaptateurs (7) pour un dispositif de lancement pour cartouches éclairantes.

3. Drapeau de signalisation selon la revendication 1, caractérisé par le fait que le pied (4) de la manche (3) est muni d'une rainure (8) avec une largeur intérieure correspondant à l'épaisseur des glaces de voiture usuelles.

4. Drapeau de signalisation selon les revendications 1 - 3, caractérisé par le fait que le haut bout de la hampe (2) est muni d'un capuchon (5) étant attaché à la manche (3) par un joint à baionnette.

5. Drapeau de signalisation selon les revendications 1 - 4 caractérisé par le fait que la hampe (2) est fixée au capuchon (5) par un élément intermédiare pivotant.

6. Drapeau de signalisation selon les revendications 1 - 5, caractérisé par le fait que le capuchon (5) consiste en ou est muni d'une matière fortement réfléchissante.

7. Drapeau de signalisation selon les revendications 1 - 6, caractérisé par le fait que l'étoffe (1) consiste en une matière fortement réfléchissante.

Fig. 1

EP 0 270 849 B1

Fig. 2

Fig. 3